# EUROPEAN PATENT SPECIFICATION

(11) **EP 2 607 228 B1**
(45) Date of publication and mention of the grant of the patent: **04.07.2018**
(21) Application number: 12198011.4
(22) Date of filing: 19.12.2012
(51) Int. Cl.: B63H 25/02, F16C 1/10, F16C 1/18, F16C 1/20, B63H 25/10

(54) **Steering system for boats**
Lenksystem für Boote
Système de direction pour bateaux

(30) Priority: 23.12.2011 IT GE20110146
(43) Date of publication of application: 26.06.2013
(73) Proprietor: Ultraflex Spa, 16015 Casella (GE) (IT)
(72) Inventor: Campagna, Marco, I-16137 Genova (IT); Gai, Giorgio, I-16012 Busalla (IT)
(74) Representative: Karaghiosoff, Giorgio Alessandro

(56) References cited:
- FR-A1- 2 662 137
- US-A- 3 093 162
- US-A- 3 135 130
- US-A- 3 258 990
- US-A- 3 359 822
- US-A- 4 014 281
- US-A- 4 449 420
- US-A- 4 898 046
- US-A1- 2009 095 118

## Description

The present invention relates to a steering system for boats comprising at least one control member of the steering wheel type, lever type or the like, connected to a driving shaft of a transmission, which is composed of at least two transmission elements dynamically engaged one with the other, of which one input and one output transmission elements, which output element drives at least one member transferring the motion of said control member to an operating unit, such that a movement/rotation of said control member is transmitted to said transfer member through said transmission (see, for example, FR-A-2 662 137, corresponding to the preamble of claim 1). The arrangement just described is the standard one for a steering system for boats, particularly a mechanical steering system for controlling boats.

Such as described such steering systems have a control member, whose movement drives the components of a transmission intended to transfer the movement of the control member in a corresponding operation of an operating unit to control for example steering actuators.

The transmission of such steering systems has to be particularly efficient, namely the input element has to dynamically engage the output element without generating "clearances" for efficaciously transmitting the movement of the control member to the transfer member to an operating unit.

The components of such transmission further undergo high stresses. Firstly such components are subjected to stresses related to the mechanical operation, namely the continuous changes in the direction related to the boat movement generate continuous fatigue cycles that wear the components out, which deteriorate leading to malfunctions and inefficiencies in the performance of the whole steering system.

Secondly the wear of the transmission components can also be due to external agents belonging to the environment wherein the steering systems operate, i.e. the marine one, which is particularly aggressive towards the different components.

Finally the presence of "clearances" in the dynamic coupling of the transmission components, can create a relative movement between the components affecting also the "softness" of the steering system, that is the fluidity of the control member during the movement, as well as the quickness of response of the operating unit on the basis of the movement of the control member.

Therefore there is an unsatisfied need for making a steering system for boats, particularly a mechanical steering system, which by means of relatively simple and inexpensive arrangements allows prior art drawbacks to be solved, which allows in particular the performance and efficiency of transmissions of prior art known steering systems to be improved.

The present invention achieves the above aims by providing a steering system of the type described above, wherein at least said input element is composed of a material obtained by a sintering process.

Generally the components of the known prior art transmissions, such as gears or the like, are made of metal material obtained by pressure die-casting processes, since with such processes it is possible to obtain components which are valid as regards the performance in relation to the low wear level of the components as a response to the effect of external agents.

Therefore there may be a technical prejudice related to the use of sintered materials in mechanical steering systems. The components made of sintered material in theory are affected by oxidation due to external agents more than pressure die-cast materials, however such oxidation does not occur in either steering systems of the present invention or in steering systems known in the prior art since the transmission generally is provided inside an air-tight case and the several components are lubricated to improve their operation.

A particularly advantageous aspect in the use of sintered materials compared to pressure die-cast materials is given by the fact that the pressure die-casting process is not easy to control, hence the risk of the formation of blowholes or cracks in the components is high, which does not occur with the sintering process that, besides being easy to control, is more repeatable.

The absence of cracks or blowholes inside the transmission components obviously increases the safety of the whole steering system, reducing the frequency of the breaking of the individual transmission components.

Moreover the sintering process has a simpler processing, thus producing components whose dynamic coupling is obtained in a more accurate way, increasing the performance of the transmission and reducing the wear of the several components.

Therefore the use of sintered materials makes it possible to made steering systems that are more "soft" as regards the control fluidity and while being more performing compared with steering systems known in the prior art.

According to a possible embodiment the transmission is composed of at least a first gear wheel engaging at least a second gear wheel, which drives the member transferring the motion of the control member to an operating unit.

Such gear wheels are made at least partially by using sintered materials.

Therefore preferably the transmission of the steering system of the present invention is composed of gears, composed of gear wheels that dynamically engage each other in order to transmit the movement of the control member to an operating unit, through the motion transfer member.

According to the invention, the transmission is composed of a central pinion driven by the control member so as to rotate, which central pinion engages at least two peripheral pinions, which engage the internal toothing of a gear wheel, which drives the motion transfer member.

The central pinion and the peripheral pinions are rotatably mounted each one about a corresponding axis of rotation such that the rotation of the central pinion drives the motion transfer member.

The described arrangement meets one of the requirements necessary for mechanical steering systems, that is the fact of having a good gear ratio of the control member movement to the transfer member motion, such that in order to perform the necessary manoeuvres short movements of the control member are required.

The transmission just described, besides improving the gear ratio, allows the force the central pinion has to exert on one or more peripheral pinions to be discharged reducing the wear and possible damages of the pinion teeth.

The reduction in the wear and the higher operating efficiency is further guaranteed by making the central pinion and the peripheral pinions of sintered material.

A variant embodiment provides also the gear wheel to be made of sintered material.

Even in this case the use of sintered materials increases the safety of the steering system preventing the transmission gears from being broken and moreover the sintering process allows items to be obtained without draft angle, improving the accuracy of the dynamic coupling of the pinions.

The further characteristics and improvements of the steering system of the present invention described below are mainly directed to improve the performances of the steering system.

According to one embodiment there is provided a sliding element of the bearing type or the like mounted on the gear wheel such to facilitate the sliding thereof and to improve the transmission of the motion of the control member to the transfer member.

Generally any type of bearing among those known in the prior art is used, such as for example radiant, rolling, magnetic bearings which are inserted instead of the usual plain bushings provided in the steering systems of known prior art.

As an alternative in order to accomplish the same function it is possible to provide high performance bushings, namely made of materials that allow the coefficient of friction among the moving parts to be reduced.

Similar arrangements directed at facilitating the relative movement between two parts can be provided in all the components of the transmission of the steering system.

Therefore it is possible to provide to insert bearings or high performance bushings on pinions or on the driving shaft of the control member.

As mentioned earlier, the gear wheel is the output member intended to transmit the motion to the transfer member intended to transfer the motion of the control member to an operating unit.

Consequently the transfer member can be of any type known in the prior art, therefore the movement of the gear wheel can drive for example a rocking lever, an actuator or a rocker arm.

According to the invention, the motion transfer member is composed of a push and/or pull cable mounted so as to slide into a sheath and the movement of said cable is driven by the gear wheel, at least one locking element for the cable being provided on the gear wheel.

The push and/or pull cable can have the known characteristics of the so called "push/pull" cables and which are widely described in the patent applications GE2007A000066, SV2004A000001 to the same applicant and GE2008A000089.

The cable of the steering system of the present invention has to have features to allow it to be mounted trying to avoid tortuous paths and too much sharp curves such to allow the driver to steer the boat easily at all speeds and in order to reduce inefficiencies and clearances in the system. The push and/or pull cable of the steering system of the present invention comprises a central core covered by a plurality of strands helically wound about the longitudinal axis of the central core.

Moreover the plurality of strands is composed of strands of metal material and of strands of plastic material.

The presence of plastic strands facilitates the cable to slide inside the sheath without the need of completely covering the cable with plastic material. The plastic coating made on prior art known cables facilitates it to slide, but it has problems related to the fact of finding the points where the cable has to be secured to the gear wheel.

The plastic coating of prior art known cables is sealed to the metal core and the finding of the securing points requires to remove, at least partially, the coating itself.

The plastic strands are preferably heat-sealed to the central core.

According to an improvement the plurality of strands provides each plastic strand to be placed between two metal strands and/or each metal strand to be placed between two plastic strands.

The characteristics just described can be provided as an alternative or in combination to the constructive characteristics described in the patent applications described above.

The present invention (which is defined by the technical features set forth in claims 1 and 6) further relates to a pull and/or push cable comprising a central core covered by a plurality of strands helically wound about the central core, said plurality of strands being composed of strands of metal material and of strands of plastic material.

Moreover each plastic strand is placed between two metal strands and/or each metal strand is placed between two plastic strands.

These and other characteristics and advantages of the present invention will be more clear from the following description of some embodiments shown in the annexed drawings wherein:
Fig.1a is a principle diagram of the steering system for boats of the present invention according to a preferred variant embodiment;
Fig.1b is a section taken along a side plane of the variant embodiment of the steering system of the present invention;
Fig.2 is a detail of the steering system for boats of the present invention;
Figs.3a and 3b are a cable of the steering system of the present invention, according to a view and a sectional plane passing by the longitudinal axis of the cable respectively.

It is specified that the shown examples below refer to a specific embodiment of the steering system for boats of the present invention and have not to be considered as limiting the inventive concept underlying the present invention, its scope being defined by the claims. Generally the steering system for boats of the present invention comprises at least one control member of the steering wheel type, lever type or the like, connected to a driving shaft of a transmission, which is composed of at least two transmission elements dynamically engaged one with the other, of which one input and one output transmission elements.

The output element drives at least one member transferring the motion of the control member to an operating unit, such that a movement/rotation of the control member is transmitted to the transfer member through the transmission.

At least the input element is made of a material obtained by a sintering process.

The general concept of making one or more of the transmission components of sintered materials applies to the embodiments shown below, but a particular arrangement of said components is shown, as well as a particular arrangement of the transfer member.

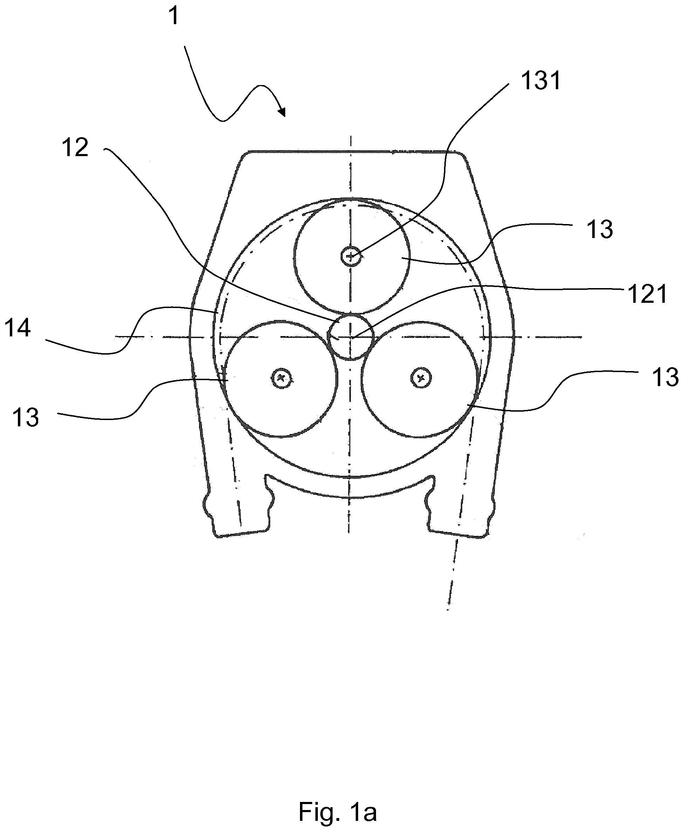

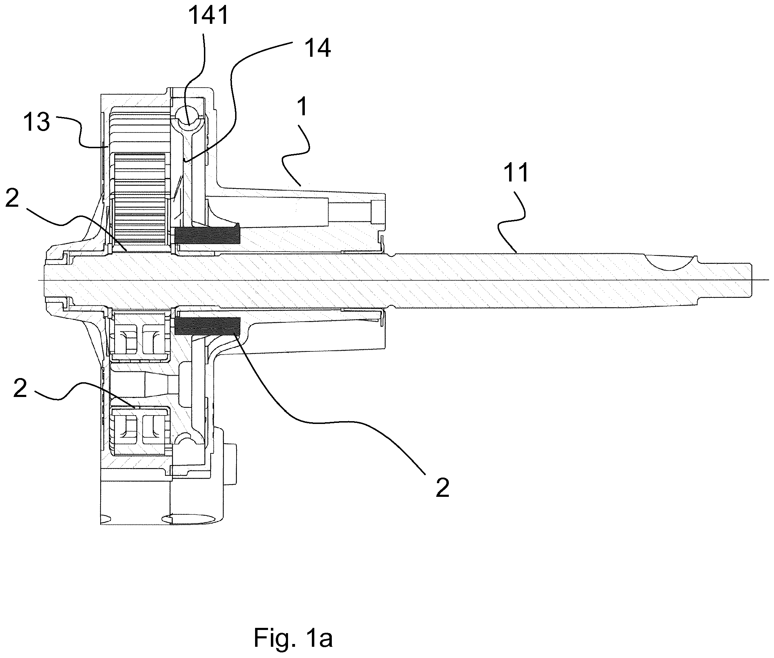

With a particular reference to figures 1a and 1b the steering system of the present invention comprises a control member in the form of a steering wheel, whose rotation drives a driving shaft 11 connected to a transmission composed of a train of gear wheels, wherein the output gear wheel drives the transfer member on the basis of the rotation of the steering wheel and of the driving shaft.

Particularly the driving shaft 11 is connected to a central pinion 12, driven so as to rotate, which engages three different peripheral pinions 13, which peripheral pinions 13 engage the internal toothing of a gear wheel 14 that drives the motion transfer member.

The central pinion 12 and the peripheral pinions 13 are rotatably mounted each one about a corresponding axis of rotation, 121 and 131 respectively, such that the rotation of the central pinion 12 drives the motion transfer member by the rotation of the gear wheel 14.

The gear wheel 14 has the same axis of rotation 121 as the central pinion 12 for constructional simplicity, but it is possible to provide any axis of rotation.

At the same time figure 1a shows three peripheral pinions 13 arranged in such a way as to engage contemporaneously different points of the central pinion 12 and such to have the axes of rotation spaced each other by an angular distance of 120°.

Such arrangement is the one that best allows a compromise between a high gear ratio and overall dimensions of the steering system to be reached, but all the configurations known in the prior art are possible.

The transmission is further contained into an external case 1, where a cable 3 slides therein which is the motion transfer member, that will be described below.

Figure 1b shows a section taken along a side plane of the steering system of the present invention wherein a sliding element of the bearing type or the like 2 is provided, mounted on the gear wheel 14, such as to facilitate the rotation thereof.

The bearing 2 is placed between the gear wheel 14 and the driving shaft 11.

All the components of the transmission that have a rotation may be provided in combination with such sliding element, such sliding element can be composed of a bearing or a bushing made of a high performance material, having a low coefficient of friction.

In particular in figure 1b such sliding elements 2 are provided mounted on the central pinion 12 and on peripheral pinions 13.

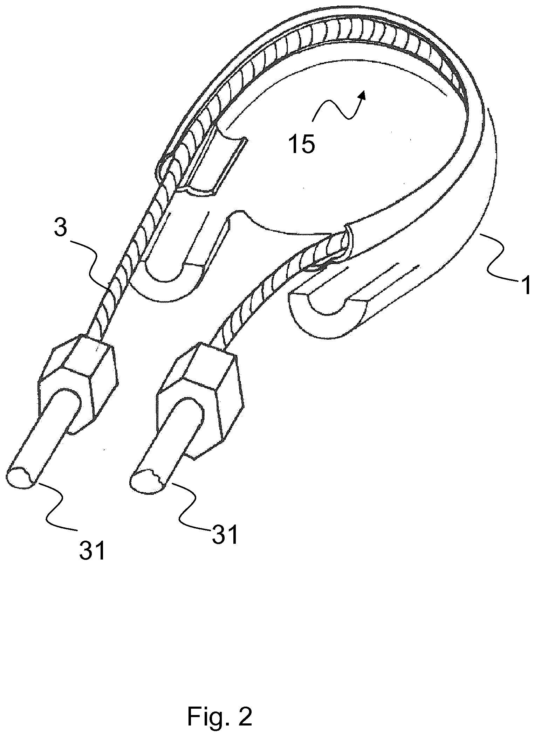

According to the embodiment shown in figures 1a to 3b, the motion transfer member is composed of a push and/or pull cable mounted so as to slide inside a sliding sheath 15, the movement of the cable 3 being driven by the rotation of the gear wheel 14.

On the gear wheel 14 there are provided locking means 141 for the push and/or pull cable 3, such that the cable 3 is integral with the gear wheel 14 and that its rotation corresponds to a movement of the cable 3.

The ends 31 of the cable 3 will be connected to an operating unit not shown in the figures, in order to accomplish the motion driven by the control member.

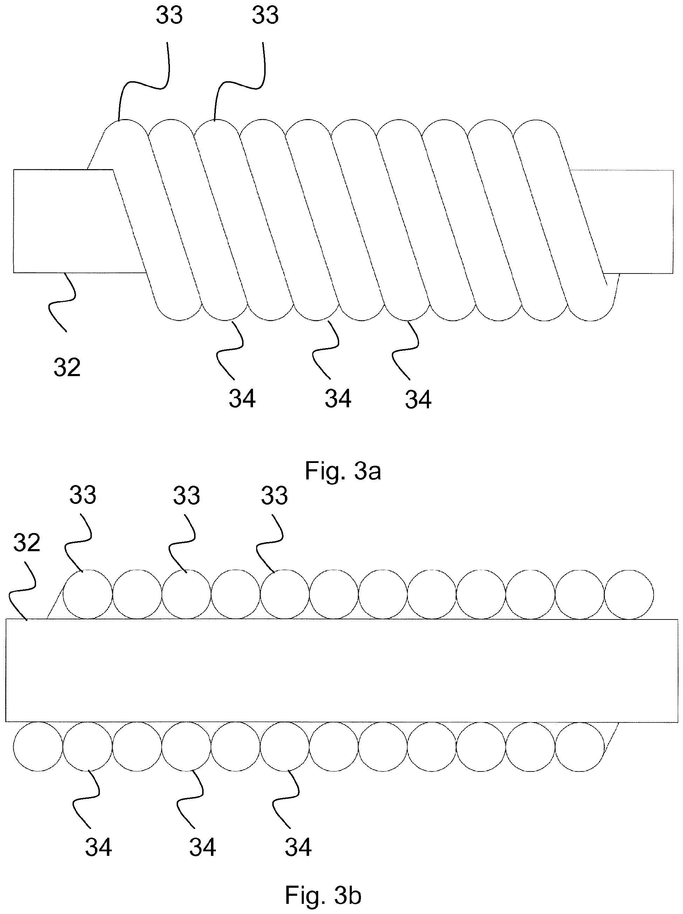

Figures 3a and 3b show an embodiment of the push and/or pull cable 3 according to the invention, particularly a view and a section taken along a plane passing by the longitudinal axis are shown.

According to such embodiment, the push and/or pull cable comprises a central core 32, coated by a plurality of strands helically wound about the longitudinal axis of the central core 32.

The plurality of strands is composed of strands of metal material 33 and of strands of plastic material 34.

Particularly the strands of metal type 33 and the strands of plastic material 34 are arranged in such a way that each plastic strand 34 is placed between two metal strands 33 and each metal strand 33 is placed between two plastic strands 34.

Particularly figure 3b shows the cable according to a section along a plane passing by the longitudinal axis, such as to show the proper arrangement of the metal strands 33 and plastic strands 34.

## Claims

1. Steering system for boats comprising at least one control member of the steering wheel type, lever type or the like, connected to a driving shaft (11) of a transmission,
said transmission being composed of at least two transmission elements dynamically engaged one with the other, of which one input and one output transmission elements, which output element drives at least one member (3) transferring the motion of said control member to an operating unit, such that a movement/rotation of said control member is transmitted to said transfer member (3) through said transmission,
being said transmission composed of a central pinion (12) driven so as to rotate by said control member, which central pinion (12) engages at least two peripheral pinions (13), which peripheral pinions (13) engage the internal toothing of a gear wheel (14), which gear wheel (14) drives said motion transfer member (3),
said central pinion (12) and said peripheral pinions (13) being rotatably mounted each one about a corresponding axis of rotation such that the rotation of said central pinion (12) drives said motion transfer member (3)
and at least said central pinion (12) and at least said peripheral pinions (13) being composed of sintered material,
being said motion transfer member (3) composed of a pull and/or push cable (3) mounted so as to slide into a sliding sheath (15), the movement of said cable being driven by said gear wheel (14),
at least one locking element (141) for said cable (3) being provided on said gear wheel (14)
**characterized in that**
said pull and/or push cable (3) comprises a central core (32), which central core (32) is covered by a plurality of strands helically wound about the longitudinal axis of said central core (32),
said plurality of strands being composed of strands of metal material (33) and of strands of plastic material (34).

2. Steering system according to claim 1, wherein there is provided a sliding element (2) of the bearing type or the like mounted on said gear wheel (14), such to facilitate the rotation thereof.

3. Steering system according to one or more of the preceding claims, wherein said sliding element (2) is provided mounted on said central pinion (12) and/or on said peripheral pinions (13).

4. Steering system according to one or more of the preceding claims, wherein said sliding element (2) is provided mounted on said driving shaft (11).

5. Steering system according to one or more of the preceding claims, wherein said plurality of strands provides each plastic strand (34) to be placed between two metal strands (3) and/or each metal strand (33) to be placed between two plastic strands (34).

6. Pull and/or push cable comprising a central core (32) covered by a plurality of strands,
**characterized in that**
said strands are helically wound about said central core, said plurality of strands being composed of strands of metal material (33) and of strands of plastic material (34).

7. Pull and/or push cable according to claim 6, wherein each plastic strand (34) is placed between two metal strands (33) and/or each metal strand is placed between two plastic strands.

## Patentansprüche

1. Rudersystem für Wasserfahrzeuge mit mindestens einem Steuerglied des Typs Steuerrad, Hebel oder dergleichen, das mit einer Antriebswelle (11) eines Getriebes verbunden ist, wobei das Getriebe aus mindestens zwei dynamisch miteinander in Eingriff stehenden Getriebeelementen besteht, von denen eines ein Eingangsgetriebeelement und das andere ein Ausgangsgetriebeelement ist, welches Ausgangsgetriebeelement zumindest ein Übertragungssglied (3) zur Übertragung der Bewegung des Steuerglieds auf eine operative Einheit antreibt, so dass eine Bewegung/Drehung des Steuerglieds über das Getriebe auf das Übertragungsglied (3) übertragen wird, wobei das Getriebe aus einem zentralen Ritzel (12), das von dem Steuerglied drehangetrieben ist, und das zentrale Ritzel (12) in mindestens zwei Umfangsritzel (13) eingreift, welche Umfangsritzel (13) mit der Innenverzahnung eines Zahnrades (14) in Eingriff stehen, welches Zahnrad (14) das Bewegungsübertragungsglied (3) antreibt, wobei das zentrale Ritzel (12) und die Umfangsritzel (13) jeweils um eine entsprechende Drehachse drehbar gelagert sind, so dass die Drehung des zentralen Ritzels (12) das Bewegungsübertragungsglied (3) antreibt, und zumindest das zentrale Ritzel (12) und zumindest die Umfangsritzel (13) aus Sintermaterial bestehen, wobei das Bewegungsübertragungsglied (3) aus einem Zug- und/oder Schubseil (3) besteht, das in eine Gleitummantelung (15) gleitend gelagert ist, wobei die Bewegung des Seils durch das Zahnrad (14) angetrieben wird, wobei an diesem Zahnrad (14) mindestens ein Verriegelungselement (141) für das Seil (3) vorgesehen ist, **dadurch gekennzeichnet, dass** das Zug- und/oder Schubseil (3) eine zentrale Seele (32) umfasst, wobei die zentrale Seele (32) von einer Mehrzahl von schraubenförmig um die Längsachse der zentralen Seele (32) gewickelten Stränge umhüllt ist, wobei die Mehrzahl von Strängen aus Strängen aus metallischem Material (33) und aus Kunststoffsträngen (34) besteht.

2. Rudersystem nach Anspruch 1, wobei an dem Zahnrad (14) ein Gleitelement (2) des Typs Lager oder dergleichen angebracht, um dessen Drehung zu erleichtern.

3. Rudersystem nach einem oder mehreren der vorhergehenden Ansprüche, wobei das Gleitelement (2) an dem zentralen Ritzel (12) und/oder an den Umfangsritzeln (13) angebracht ist.

4. Rudersystem nach einem oder mehreren der vorhergehenden Ansprüche, wobei das Gleitelement (2) an der Antriebswelle (11) angebracht vorgesehen ist.

5. Rudersystem nach einem oder mehreren der vorhergehenden Ansprüche, wobei bei der Mehrzahl von Strängen jeder Kunststoffstrang (34) zwischen zwei Metallsträngen (3) und/oder jeder Metallstrang (33) zwischen zwei Kunststoffsträngen (34) angeordnet ist.

6. Zug- und/oder Schubseil mit einer von mehreren Strängen umhüllten zentralen Seele (32), **dadurch gekennzeichnet, dass** die Stränge schraubenförmig um der zentralen Seele gewickelt sind, wobei die Mehrzahl von Strängen aus Strängen aus metallischem Material bestehen (33) und aus Strängen aus Kunststoffmaterial (34) besteht.

7. Zug- und/oder Schubseil nach Anspruch 6, wobei jeder Kunststoffstrang (34) zwischen zwei Metallsträngen (33) und/oder jeder Metallstrang zwischen zwei Kunststoffsträngen angeordnet ist.

## Revendications

1. Timonerie pour bateaux comprenant au moins un organe de commande du type à volant, à levier ou similaires, relié à un arbre d'entraînement (11) d'une transmission,
ladite transmission étant composée d'au moins deux éléments de transmission dynamiquement engagés entre eux, un élément de transmission d'entrée et un autre de sortie, ledit élément de sortie entraînant au moins un organe de transfert (3) du mouvement dudit organe de commande à une unité de manoeuvre, de façon qu'un déplacement ou une rotation dudit organe de commande soit transféré audit organe de transfert (3) par le biais de ladite transmission,
ladite transmission étant composée d'un pignon central (12) entraîné en rotation par ledit organe de commande, ledit pignon central (12) engageant au moins deux pignons périphériques (13), lesdits pignons périphériques (13) engageant l'endentement interne d'une roue dentée (14), ladite roue dentée (14) entraînant ledit organe de transfert (3) du mouvement,
ledit pignon central (12) et lesdits pignons périphériques (13) étant montés rotatifs chacun autour d'un axe de rotation correspondant, de façon que la rotation dudit pignon central (12) entraîne ledit organe de transfert (3) du mouvement,
et au moins ledit pignon central (12) et au moins lesdits pignons périphériques (13) étant composés d'un matériau fritté,
ledit organe de transfert (3) du mouvement étant composé d'un câble de traction et/ou de poussée (3) monté de manière à glisser dans une gaine de glissement (15), le mouvement dudit câble étant entraîné par ladite roue dentée (14),
au moins un élément de verrouillage (141) pour ledit câble (3) étant placé sur ladite roue dentée (14),
**caractérisée en ce que**
ledit câble de traction et/ou de poussée (3) comprend un noyau centrale (32), ledit noyau central (32) étant recouvert par une pluralité de brins enroulés en hélice autour de l'axe longitudinal dudit noyau central (32),
ladite pluralité de brins étant composée de brins en métal (33) et de brins en plastique (34).

2. Timonerie selon la revendication 1, dans laquelle un élément de coulissement (2) du type à coussinet ou similaire monté sur ladite roue dentée (14) de façon à en faciliter la rotation.

3. Timonerie selon l'une ou plusieurs des revendications précédentes, dans laquelle ledit élément de coulissement (2) est monté sur ledit pignon central (12) et/ou sur lesdits pignons périphériques (13).

4. Timonerie selon l'une ou plusieurs des revendications précédentes, dans laquelle ledit élément de coulissement (2) est monté sur ledit arbre d'entraînement (11).

5. Timonerie selon l'une ou plusieurs des revendications précédentes, dans laquelle ladite pluralité de brins comporte que chaque brin en plastique (34) soit placé entre deux brins en métal (3) et/ou que chaque brin en métal (33) soit placé entre deux brins en plastique (34).

6. Câble de traction et/ou de poussée comprenant un noyau central (32) recouvert par une pluralité de brins,
**caractérisé en ce que**
lesdits brins sont enroulés en hélice autour dudit noyau central, ladite pluralité de brins étant composée de brins en métal (33) et de brins en plastique (34).

7. Câble de traction et/ou de poussée selon la revendication 6, dans lequel chaque brin en plastique (34) est placé entre deux brins en métal (33) et/ou chaque brin en métal est placé entre deux brins en plastique.
